# EUROPÄISCHE PATENTSCHRIFT

(11) **EP 1 977 293 B1**
(45) Veröffentlichungstag und Bekanntmachung des Hinweises auf die Patenterteilung: **07.07.2010**
(21) Anmeldenummer: 07701277.1
(22) Anmeldetag: 25.01.2007
(51) Int. Cl.: G05B 19/00, G06F 12/00, H04L 12/403

(54) **VERFAHREN ZUR ÜBERTRAGUNG VON DATEN ZWISCHEN TEILNEHMERN IN EINEM BUSSYSTEM ZUR STEUERUNG VON MASCHINEN UND ANLAGEN**
METHOD FOR TRANSMITTING DATA BETWEEN SUBSCRIBERS IN A BUS SYSTEM FOR CONTROLLING MACHINES AND INSTALLATIONS
PROCEDE DE TRANSMISSION DE DONNEES ENTRE DES ABONNES DANS UN SYSTEME DE BUS POUR LA COMMANDE DE MACHINES ET D'INSTALLATIONS

(30) Priorität: 25.01.2006 AT 1122006
(43) Veröffentlichungstag der Anmeldung: 08.10.2008
(73) Patentinhaber: Sigmatek GmbH & Co KG, 5112 Lamprechtshausen (AT)
(72) Erfinder: KUSEJKO, Theodor, A-5112 Lamprechtshausen (AT); MELKUS, Andreas, A-5110 Oberndorf (AT)
(74) Vertreter: Sonn & Partner Patentanwälte
(86) Internationale Anmeldenummer: PCT/AT2007/000030
(87) Internationale Veröffentlichungsnummer: WO 2007/085033

(56) Entgegenhaltungen:
- US-A- 5 495 240
- US-A- 5 758 127
- US-A- 6 141 736

## Beschreibung

Die Erfindung betrifft ein Verfahren zur Übertragung von Daten zwischen Teilnehmern in einem Bussystem zur Steuerung von Maschinen und Anlagen, wobei von einem Master Befehle an Teilnehmer des Bussystems gesendet werden, um Daten zu den Teilnehmern zu senden oder von den Teilnehmern zu empfangen.

Im Falle der Steuerung einer Maschine oder Anlage werden Infomationen bzw. Daten zwischen einer oder mehreren Steuereinheit(en) und einer Vielzahl von Ein-/Ausgabe-Geräten ausgetauscht. Zumindest ein Teil dieser Informationen bzw. Daten ist für den zuverlässigen Betrieb der Maschine oder Anlage unbedingt erforderlich. Die Informationen müssen daher in einer Form übertragen werden, dass sie in den, durch den zu steuernden Prozess vorgegebenen Zeitintervallen so zuverlässig transportiert werden, dass dieser Prozess stabil und reproduzierbar läuft. Die Zeitintervalle können deutlich kürzer als 1 Millisekunde sein.

Da die Teilnehmer physikalisch auch in größeren Abständen angeordnet sein können, ist zur Datenübertragung ein Bussystem sinnvoll. Damit kann einerseits die Verkabelung vereinfacht werden, andererseits eine Verfälschung der zum Teil analogen Messgrößen durch lange Leitungen vermieden werden.

Seit vielen Jahren werden solche Bussysteme verwendet. Dabei existieren grundsätzlich folgende Ausprägungen, welche spezifische Vor- und Nachteile aufweisen:
- Linienstruktur
- Ringstruktur
- Sternstruktur

Nur die Sternstruktur erlaubt das beliebige Hinzufügen bzw. Entfernen von Teilnehmern innerhalb des Bussystems. Speziell Ring- oder Linienstrukturen sind für Änderungen der Konfiguration kompliziert.

Eine zusätzliche Anforderung an das Bussystem besteht in der Möglichkeit der Einbindung in standardisierte Netzwerke, insbesondere nach der Ethernet-Technologie, dem TCP/IP (Transmission Control Protocol/Internet Protocol)- oder dem Internet-Protokoll.

Bekannte Verfahren und Systeme zur Datenübertragung in Bussystemen weisen eine oder mehrere der folgenden Einschränkungen auf:
- zu teuer für einfache Teilnehmer
- zu langsam für viele kleine Datenmengen
- zu langsam für große Datenmengen
- zu unsicher für wichtige Daten
- zu eingeschränkt in der Reichweite
- nicht in der Lage ohne Beeinträchtigung des Echtzeitverhaltens Teilnehmer zu entfernen oder hinzuzufügen
- nicht in der Lage die Teilnehmer in einem Zeitbereich unter 1 ms in ausreichender Genauigkeit taktsynchron zu betreiben
- nicht in der Lage Ethernet-Pakete von anderen Daten zu isolieren und in vertretbarer Zeit zu einer Zieladresse zu transportieren.

Bekannte Ansätze versuchen diese Problematik zu umgehen. Als Beispiele seien angeführt:
- POWERLINK: Stellt eine Protokollerweiterung zum Ethernet-Standard nach IEEE 802.3 dar. Es handelt sich um ein Master-gesteuertes Frage-Antwort-System. Im Bussystem sind jedoch nur so genannte HUBS zulässig. Standard Ethernet muss mit speziellen Switches eingeschleust werden. Zerstörte Nachrichten werden nicht wiederholt, zumindest nicht im gleichen Zyklus.
- ETHERCAT: Es handelt sich dabei um ein Verfahren, bei dem der Master einen Datenrahmen ringförmig durch alle Teilnehmer schickt. Jeder Teilnehmer entnimmt seine Daten und stellt seine in den Datenrahmen hinein und modifiziert am Ende die CRC (Cyclic Redundancy Check)-Information. Standard Ethernet muss mit speziellen Switches eingeschleust werden. Zerstörte Nachrichten werden nicht wiederholt, zumindest nicht im gleichen Zyklus.
- PROFINET V3: Es handelt sich dabei um einen Industrial Ethernet-Standard nach einem Master-Slave-Prinzip. Die Slaves bekommen eine Art Fahrplan zugewiesen, der bezogen auf eine allen Teilnehmern bekannte Zeit die jeweiligen Sendezeitpunkte so festlegt, dass die Antwortdaten ohne Kollisionen beim Master ankommen. Standard Ethernet muss mit speziellen Switches eingeschleust werden. Zerstörte Nachrichten werden nicht wiederholt, zumindest nicht im gleichen Zyklus.

Andere Verfahren versuchen durch-Zeitstempelverfahren zumindest ein eingeschränktes Echtzeitverhalten zu erreichen.

Die US 5 495 240 A beschreibt ein Master-Slave-Datenübertragungssystem mit flexiblem Eindraht-Bus, welches beispielsweise im Kraftfahrzeugbereich Anwendung findet. Da bei Eindraht-Bussystemen die Datenübertragung in beiden Richtungen, d.h. vom Master zum Teilnehmer und vom Teilnehmer zum Master, über die selbe Leitung erfolgen muss, eignet sich ein solches Bussystem nur für niedrige Datenübertragungsraten bzw. geringe Leitungslängen.

Allen diesen Verfahren ist gemeinsam, dass trotz der Verwendung von Standard Ethernet Protokollen nur spezielle Produkte im Echtzeitnetz verwendet werden können, die für dieses spezielle Netz entwickelt wurden.

Die Aufgabe der vorliegenden Erfindung besteht daher in der Schaffung eines oben genannten Verfahrens, welches eine Übertragung von Daten zwischen Teilnehmern eines Bussystems in Echtzeit zulässt. Das Verfahren soll möglichst sicher, möglichst einfach und zuverlässig funktionieren. Nachteile bekannter Verfahren sollen vermieden oder zumindest reduziert werden.

Die Aufgabe der vorliegenden Erfindung wird durch ein oben genanntes Verfahren gelöst, bei dem die Datenbereiche der Teilnehmer des Bussystems aus Sicht des Masters als Speicher mit entsprechenden Adressen angeordnet sind, und die Befehle des Masters in willkürlicher Reihenfolge unangekündigt gesendet werden, und die Daten zwischen dem Master und den Teilnehmern von bzw. auf beliebige(n) Adressen dieses Speichers mit variabler Blocklänge übertragen werden, wobei die Befehle von den Teilnehmern sofort ausgeführt und die Ausführung unmittelbar an den Master zurückgemeldet wird, in einer Form, dass der Master den Befehl im Fehlerfall wiederholen kann, bevor der nächste Befehl gesendet wird. Das erfindungsgemäße Verfahren zeichnet sich dadurch aus, dass nur die Information übertragen wird, welche für die Datenübertragung unbedingt notwendig ist. Andere Teile, welche bei herkömmlichen Verfahren standardmäßig mitübertragen werden, entfallen hier. Im Gegensatz zu bekannten Verfahren sind zumindest für alle Teilnehmer des Bussystems, die keine Standard Ethernet-Frames benötigen, weder sonst übliche MAC (Media Access Control)- noch IP (Internet Protocol)-Adressen erforderlich. Das erfindungsgemäße Verfahren beruht auf dem Transport von kurzen Datenblöcken. Es können in jenen Zeiten, in denen der Master keine Echtzeitaufgaben zu erfüllen hat, über spezielle Ein-/Ausgabe-Einheiten des Bussystems beliebige Datenblöcke eingelesen und ausgegeben werden. Diese Datenblöcke können auch Standard Ethernet-Pakete nach IEC 802.3 sein. Dadurch ist der Datentransport durch das Netz und damit auch von und zu Teilnehmern des Bussystems, die Ethernet-Frames decodieren können, möglich.

Das Verfahren ermöglicht folgende Hauptfunktionalitäten:
- Schreiben bzw. Lesen von Daten mit variabler Länge zwischen dem Master und beliebigen Zieladressen in vorhersehbaren Ausführungszeiten.
- Transport von Datenpaketen beliebigen Inhalts von einem Teilnehmer zu einem oder mehreren anderen Teilnehmern.
- Gleichzeitiges Ansprechen mehrerer oder aller Teilnehmer für Sonderfunktionen, wie beispielsweise Zeitsynchronisierung oder das Setzen von Teilnehmern in einen vordefinierten Zustand (Reset, Betriebsart ...).

Im Gegensatz zu TCP/IP wird eine extreme Schnelligkeit und hohe Sicherheit erreicht. Um die Geschwindigkeit der Datenübertragung zu erhöhen, können die im Ethernet üblichen TCP/IP- und Ethernet-Header weggelassen werden, ohne die Funktion zu beeinträchtigen. Das erfindungsgemäße Protokoll zeichnet sich durch besondere Einfachheit aus.

Das beschriebene Verfahren beruht auf einer Vielzahl kleiner, quittierter Einzelaufträge. Da ein Standard Ethernet-Netzwerk nach IEC 802.3. für das gegenständliche Verfahren nicht vorteilhaft verwendbar ist, werden nur jene Teile aus der IEC 802.3 verwendet, welche die Übertragung mit:
- Standard Leitungen (z.B. CAT5 Twisted Pair)
- Standard übertragers ("magnetics")
- Standard Modulatoren, Codierern ("phy")
- Wahlweise auch die Stecker (RJ45)
erlauben.

Die im Ethernet definierten Inhalte können komplett durch das oben angeführte Protokoll ersetzt werden. Die physikalische Übertragung der Daten mit einem in der IEC 802 beschriebenen Verfahren ist kompatibel, der Protokollinhalt jedoch inkompatibel.

Ein weiterer Vorteil dieses Verfahrens ist, dass durch diese Änderung des Protokollaufbaues das Netz gegen alle Störungen und Angriffe, die durch die Internetwelt entstehen können, gesichert ist.

Gemäß einem Merkmal der Erfindung kann die Nutzdatenlänge größer als 2 Byte sein bzw. die Übertragungsgeschwindigkeit höher als 21 Mbit/s.

Vorteilhafterweise werden die Daten mit weniger als 24 Byte Protokoll-Overhead übertragen.

Zwei Befehle des Masters an bestimmte Teilnehmer des Bussystems werden vorzugsweise mit einer maximalen durch das Bussystem verursachten Verzögerung von kleiner als 150 µs gesendet.

Gemäß einem weiteren Merkmal der Erfindung werden Befehle von mehreren Mastern an bestimmte Teilnehmer des Bussystems gesendet.

Dabei ist es von Vorteil, dass im Falle eines Ausfalls eines Masters die Befehle durch einen anderen Master an die bestimmten Teilnehmer des Bussystems gesendet werden.

Die Erfindung wird anhand der beigefügten Abbildungen näher erläutert. Darin zeigen
- Fig. 1: ein prinzipielles Funktionsschema der Übertragung von Da- ten gemäß dem erfindungsgemäßen Verfahren zur Übertragung von Daten in einem Bussystem;
- Fig. 2: ein prinzipielles Zeitdiagramm bei der erfindungsgemäßen Übertragung von Daten;
- Fig. 3: ein Blockschaltbild einer Verbindung zwischen zwei Teil- nehmern in einem Bussystem;
- Fig.: 4A und Fig. 4B prinzipielle Zeitdiagramme der Datenübertra- gung zwischen den Teilnehmern gemäß Fig. 3 ohne TCP/IP- und mit TCP/IP-Datenverkehr; und
- Fig. 5: ein Blockschaltbild einer Topologie eines Bussystems mit zwei Mastern.

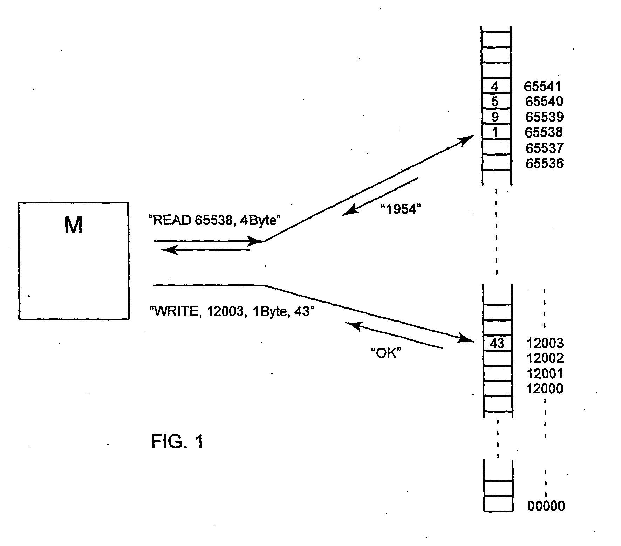

Fig. 1 zeigt ein prinzipielles Funktionsschema der Übertragung von Daten in einem Bussystem gemäß dem erfindungsgemäßen Verfahren. Das Grundprinzip der vorliegenden Erfindung kann mit einem großen verteilten Warenlager verglichen werden, in welchem ein Meister den Warenfluss leitet. Es können in beliebiger Reihenfolge, unterschiedlich große Artikel zwischen den Lieferanten zum Lager bzw. vom Lager zu den Abnehmern transportiert werden. Natürlich auch von einem Lagerplatz zu einem anderen. Fig. 1 veranschaulicht ein Warenlager, dessen Plätze durch entsprechende Adressen gekennzeichnet sind. Zusätzlich können alle Teilnehmer gemeinsam mit speziellen Informationen versorgt werden.

In einer beispielhaften Ausführung besteht der Adressraum aus 32 Bit, womit sich ein Adressraum von mehr als 4 Milliarden Byte ergibt. Die höchsten 16 Bit werden für die Auswahl des Bussteilnehmers verwendet. Dadurch sind 65536 Teilnehmer mit einem linearen Adressraum von je 65536 Adressen mit je 8 Bit Daten möglich. Die Decodierung der höchsten 16 Bit kann wahlweise in Ein-/Ausgabe-Geräten oder Verteilern des Bussystems erfolgen, oder in einer Kombination (Gruppenbildung) davon. Die Adresseinstellung kann in einer beliebigen Mischung über Ädressschalter elektronische Speicher oder feste Verdrahtung erfolgen.

Ein Lesebefehl des Masters M für 4 Bytes ab Adresse 65538 kann daher folgendermaßen lauten:
<Start><Länge><CMD><ADRESSE><Anzahl Bytes><CRC16><Stopp>
worin bedeuten:
- < Start >,< Stopp > (je 1 Byte): abhängig vom physikalischen Bussystem. Bei Ethernet macht das der PHY (Physical Layer)
- <Länge> (2 Byte) : Anzahl der Bytes im Telegramm ab inklusiv <Länge> bis <CRC16>
- <CMD> (1 Byte) enthält den Befehl "READ"
- <ADRESSE>(4Byte) Startadresse im Adressraum (im Beispiel gemäß Fig. 1 ist die Adresse = 65538)
- <Anzahl Bytes> (2Byte): (im Beispiel gemäß Fig. 1: 4)
- <CRC16> (2 Byte): eine 16 Bit CRC (Cyclic Redundancy Check) über inklusiv < Länge > bis zu <CRC16>

Der Sendebefehl ist daher 1+2+1+4+2+2+1 = 13 Byte bzw. 104 Bit lange.

Der als Slave S agierende Teilnehmer des Bussystems mit der Adresse 65538 (65538 = 16#0001 0002; der Zugriff beginnt im Slave ab Offset 2) antwortet mit einem Befehl der Art:
<Start><Länge><State><Byte[x] ....Byte[Anzahl Bytes-1]>< CRC 16><Stop>
worin bedeuten:
- <Start>,<Stopp> (je 1 Byte): abhängig vom physikalischen Bussystem. Bei Ethernet macht das der PHY (Physical Layer)
- <Länge> (2 Byte) : Anzahl der Bytes im Telegramm ab inklusiv <Länge> bis <CRC16>
- <State> (1 Byte) enthält Statusinformationen des Slave
- Byte[x] .... [x+ Byte[Anzahl Bytes-1]: Nutzdaten. (im Beispiel gemäß Fig. 1 ab Adresse 65538 des Teilnehmers 4 Bytes = 1,9,5,4))
- <CRC16> (2 Byte) eine 16 Bit CRC (Cyclic Redundancy Check) über inklusiv <Länge> bis zu <CRC16>

Der Antwortbefehl ist daher 1+2+1+4+2+1 = 11 Byte bzw. 88 Bit lange. Bei einer Anforderung von nur einem Byte wäre die Antwort entsprechend um 3 Byte bzw. 24 Bit kürzer daher nur 64 Bit lang.

In einem Bussystem mit einer Netto-Übertragungsrate von 100 MB/s dauern der Sendebefehl und der Antwortbefehl daher 104 + 88 Bit = 192 Bit x 10 ns = 1,92 µs. Bei der Anforderung nur eines Bytes würden der Sendebefehl und Antwortbefehl daher 104 + 64 = 168 Bit x 10 ns = 1,68 µs dauern. Da der Master M des Bussystems die Laufzeiten kennt, kann er theoretisch schon nach dem Sendebefehl, d.h. nach 1,04 µs + der doppelten Laufzeit und Leitungszugriffszeit feststellen, wann eine Wiederholung (ein so genanntes "Retry") gestartet werden muss. Spätestens jedoch nach 1,92 bzw. 1,68 µs + 2 x (Laufzeit + Leitungszugriffszeit). Eine einmalige Störung würde daher durch das Senden einer Wiederholung im ungünstigsten Fall lediglich zu einer Verdoppelung der Ausführungszeit führen.

Beim oben erwähnten Beispiel eines Warenlagers würde der obige Befehl des Masters M an den Slave S bedeuten:
"Hole ab Lagerplatz 65538 des Warenlagers 4 Kisten und teile mir den Inhalt der Kisten mit". Der Antwortbefehl des Slaves S bzw Warenlagers wären die Inhalte der 4 Kisten, nämlich "1, 9, 5 und 4 Einheiten."

Der weitere Befehl des Masters M an den Slave S bzw das Warenlager würde bedeuten:
"Lege in die Kiste auf Lagerplatz 12003 des Warenlagers 43 Einheiten hinein."

Vorteilhaft ist, dass der Auftraggeber sich keine Gedanken machen muss, wo die Teile im Warenlager genau liegen. Der Arbeiter im Warenlager muss sich keine Gedanken machen, wofür die Teile benötigt werden und wie diese genau ausschauen. Er muss nur wissen, wie viele Stück jeweils transportiert werden müssen und wie groß jedes ist, damit er einen passenden Behälter für den Transport bereitstellt. Er muss auch wissen, wie er die Plätze im Warenlager findet.

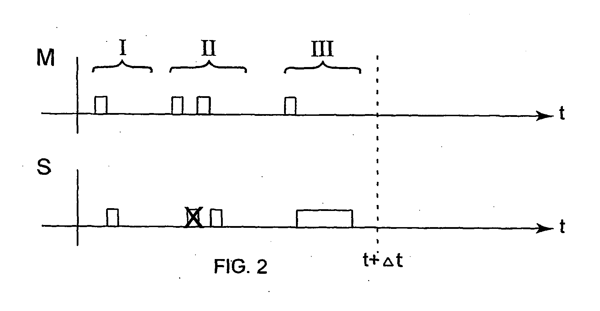

Fig. 2 zeigt ein prinzipielles Zeitdiagramm der Befehle eines Masters M und eines Slaves S in einem Bussystem in Echtzeit. Im ersten Fall (Bereich I) sendet der Master M einen Befehl an den Slave S im Bussystem. Bei einer guten Verbindung ohne Störung meldet der Slave S unmittelbar seinen Antwortbefehl an den Master M zurück. Im zweiten dargestellten Fall (Bereich II) sendet der Master M einen Befehl an den Slave S und erhält beispielsweise aufgrund einer Störung keine Rückmeldung des Slaves S, weshalb der Befehl vom Master M wiederholt (retry) wird. Nach Sendung des zweiten Befehls antwortet nunmehr der Slave S mit einem entsprechenden Antwortbefehl. Im dritten dargestellten Beispiel (Bereich III) wird auf den Befehl des Masters M vom Slave S ein Datenpaket gesendet, was in einem Zeitbereich, welcher nicht Echtzeit-Übertragung erfordert, möglich ist. Auf diese Weise können auch TCP/IP-Protokolle übertragen werden. Die in Fig. 2 strichlierte eingezeichnete Linie zeigt den Takt innerhalb des Bussystems an, der beispielsweise eine Millisekunde betragen kann, jedoch entsprechend variabel ist.

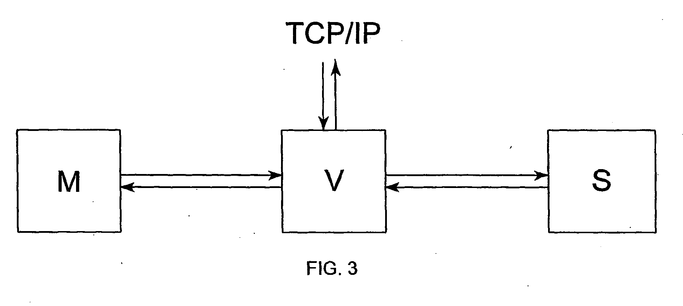

Fig. 3 zeigt ein Blockschaltbild einer Verbindung zwischen zwei Teilnehmern in einem Bussystem. Ein Teilnehmer agiert als Master M und der andere Teilnehmer als Slave S. Im Bussystem befindet sich ein Verteiler V, über den auch die TCP/IP-Daten im Ethernet-Standard ins Bussystem eingebracht werden.

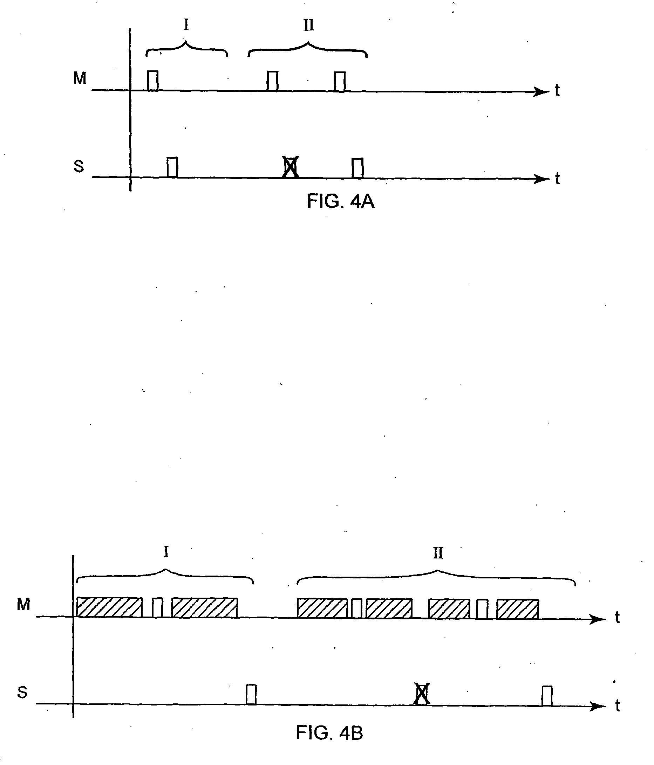

Fig. 4A zeigt Zeitdiagramme für den Fall ohne Datenübertragung im Ethernet-Standard (beispielsweise TCP/IP-Protokoll). Im Idealfall (Bereich I) sendet der Master M einen Befehl an den Slave S, welcher unmittelbar darauf einen entsprechenden Antwortbefehl an den Master M zurücksendet. Die dafür benötigte Zeit ist, wie bereits oben beschrieben, besonders kurz und lässt somit einen Echtzeit-Betrieb zu. Auch im Fehlerfall gemäß Bereich II im Diagramm gemäß Fig. 4A, wenn der Slave S aufgrund einer Störung keinen Antwortbefehl sendet, wird der Befehl des Masters M wiederholt, worauf der Slave S seinen Antwortbefehl abgibt. Auch die im Fehlerfall benötigte Zeit ist, wie bereits oben beschrieben, relativ kurz.

Fig. 4B zeigt den Fall mit Datenübertragung nach dem Ethernet-Standard (beispielsweise TCP/IP-Protokoll). Im fehlerfreien Fall (Bereich I) sendet der Master M seinen Befehl, sobald das Ethernet-Datenpaket beendet ist. Der Slave S sendet seinen Antwortbefehl in einem freien Zeitschlitz über den Bus, beispielsweise nach einem weiteren Ethernet-Datenpaket. Im Fehlerfall gemäß Bereich II im Diagramm gemäß Fig. 4B verzögert sich die Antwort aufgrund der Ethernet-Datenpakete am Bus entsprechend.

Würden diese Informationen bzw. diese Daten in einem 100 MBit Standard Ethernet nach IEC 802.3 übertragen, müssten aufgrund der minimal zulässigen Paketgrößen 2 mal 64 Byte übertragen werden, was 1024 Bit oder 10,24 Mikrosekunden entspricht. Die Performance würde daher gegenüber dem erfindungsgemäßen Übertragungsverfahren um einen Faktor von ca. 5 sinken bei nur einem Byte Nutzdaten sogar um einen Faktor von ca. 6.

Zusätzlich könnte in einem Standard Ethernetsystem selbst ohne Kollision eine Verzögerung von 2 Frames mit je ca. 1500 Byte noch einmal ca. 2*120,0 Mikrosekunden + 4 Interframe-Zeiten, also ca. 244 Mikrosekunden dazukommen.

Die Übertragungszeit würde schon alleine dadurch zwischen 10,24 und ca. 250 Mikrosekunden jittern.

Im Fehlerfall würde sich diese Zeit bei einer Wiederholung (Retry) verdoppeln und auf ca. 250*2 = 500 Mikrosekunden verlängern.

Dieses Beispiel zeigt, dass ein Standard Ethernet-Netzwerk nach IEC 802.3 für viele kurze Aufträge nur sehr beschränkt verwendbar ist.

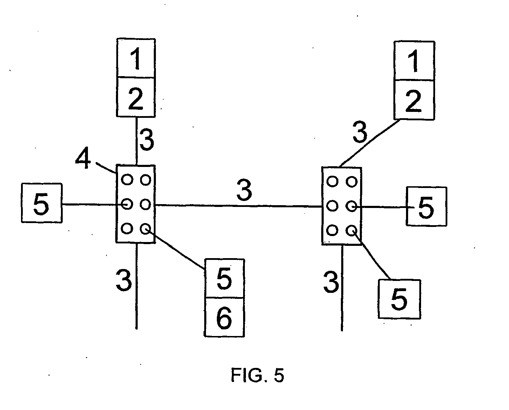

Fig. 5 zeigt ein Blockschaltbild einer Topologie eines Bussystems mit zwei Mastern. Das Bussystem besteht aus zwei zentralen Steuereinheiten 1, welche dem Auftraggeber entsprechen. Die Busmaster 2 entsprechen beim obigen Beispiel dem Spediteur, der die Abarbeitung übernimmt. Über Leitungen 3 und Verteiler 4 sind die Master bzw. zentralen Steuereinheiten 1 untereinander und mit weiteren Teilnehmern im Bussystem verbunden. Die Leitungen 3 und Verteiler 4 entsprechen dem Transportsystem, das einen Zugang in beliebiger Reihenfolge mit variablen Paketgrößen zu beliebigen Orten in vorhersehbaren Transportzeiten erlaubt. Ein-/Ausgabe-Geräte 5 entsprechen diversen Lagerplätzen, die in einer Form gekennzeichnet sind, dass sie eindeutig auffindbar sind. Schließlich können Informations-Speicher 6 vorgesehen sein.

In einer beispielhaften Ausführung besteht der Adressraum aus 32 Bit, womit sich ein Adressraum von mehr als 4 Milliarden Byte ergibt. Die höchsten 16 Bit werden für die Auswahl des Bussteilnehmers verwendet. Dadurch sind 65536 Teilnehmer mit einem linearen Adressraum von je 65536 Adressen mit je 8 Bit Daten möglich. Die Decodierung der höchsten 16 Bit kann wahlweise im Ein-/Ausgabe-Gerät 5 oder in den Verteilern 4 erfolgen, oder in einer Kombination (Gruppenbildung) davon. Die Adresseinstellung kann in einer beliebigen Mischung über Adressschalter elektronische Speicher oder feste Verdrahtung erfolgen.

## Patentansprüche

1. verfahren zur Übertragung von Daten zwischen Teilnehmern (M, S) in einem Bussystem zur Steuerung von Maschinen und Anlagen, wobei von einem Master (M) Befehle an Teilnehmer (S) des Bussystems gesendet werden, um Daten zu den Teilnehmern zu senden oder von den Teilnehmern zu empfangen, wobei die Datenbereiche der Teilnehmer des Bussystems aus Sicht des Masters als Speicher mit entsprechenden Adressen angeordnet sind, und wobei die Befehle des Masters in willkürlicher Reihenfolge unangekündigt gesendet werden, und die Daten zwischen dem Master und den Teilnehmern von bzw. auf beliebige Adressen dieses Speichers mit variabler Blocklänge übertragen werden, **dadurch gekennzeichnet, dass** die Befehle von den Teilnehmern sofort ausgeführt und die Ausführung unmittelbar in einer Form an dan Master zurückgemeldet wird, dass der Master den Befehl im Fehlerfall wiederholen kann, bevor der nächste Befehl gesendet wird.

2. Verfahren nach Anspruch 1, **dadurch gekennzeichnet, dass** die Nutzdaten mit einer Länge größer als 2 Byte übertragen werden.

3. Verfahren nach Anspruch 1 oder 2, **dadurch gekennzeichnet, dass** die Daten mit weniger als 24 Byte Protokoll-Overhead übertragen werden.

4. Verfahren nach einem der Ansprüche 1 bis 3, **dadurch gekennzeichnet, dass** zwei Befehle mit einer maximalen durch das Bussystem verursachten Verzögerung von 150 µs gesendet werden.

5. Verfahren nach einem der Ansprüche 1 bis 4, **dadurch gekennzeichnet, dass** Befehle von mehreren Mastern gesendet werden.

6. Verfahren nach Anspruch 5, **dadurch gekennzeichnet, dass** im Falle eines Ausfalls eines Masters die Befehle durch einen anderen Master gesendet werden.

## Claims

1. Method for transmitting data between subscribers (M, S) in a bus system for controlling machines and installations, wherein commands are sent from a master (M) to subscribers (S) of the bus system in order to send data to the subscribers or receive data from the subscribers, with the data sections of the subscribers of the bus system being arranged as storage with corresponding addresses from the point of view of the master, and with the master's commands being sent in an arbitrary order and without prior notice, and the data between the master and the subscribers being transmitted from and/or to any addresses of this storage with varying block lengths, **characterised in that** the commands are immediately executed by the subscribers and the execution is immediately reported to the master in a form that enables the master to repeat the command in case of an error before sending the next command.

2. Method according to Claim 1, **characterised in that** the data to be used are transmitted with a length of more than 2 bytes.

3. Method according to Claim 1 or 2, **characterised in that** the data are transmitted with less than 24 bytes of protocol overhead.

4. Method according to any one of Claims 1 to 3, **characterised in that** two commands are sent with a maximum delay of 150 µs caused by the bus system.

5. Method according to any one of Claims 1 to 4, **characterised in that** commands are sent by a plurality of masters.

6. Method according to Claim 5, **characterised in that** in case of an outage of a master the commands are sent by a different master.

## Revendications

1. Procédé de transmission de données entre participants (M, S) dans un système de bus pour la commande de machines et d'installations, des instructions étant adressées par un maître (M) à des participants (S) du système de bus, pour adresser des données aux participants ou en recevoir des participants, où les zones de données des participants du système de bus sont agencées suivant le point de vue du maître sous forme de mémoire avec des adresses correspondantes, et où les instructions du maître sont adressées dans un ordre aléatoire sans déclaration préalable, et les données entre le maître et les participants sont transmises avec des longueurs de bloc variables depuis ou vers des adresses quelconques de ladite mémoire, **caractérisé en ce que** les instructions sont immédiatement exécutées par les participants et l'exécution directement déclarée en retour au maître sous une forme permettant au maître de répéter l'instruction en cas d'erreur avant l'émission de l'instruction suivante.

2. Procédé selon la revendication 1, **caractérisé en ce que** les données utiles sont transmises avec une longueur supérieure à 2 octets.

3. Procédé selon la revendication 1 ou 2, **caractérisé en ce que** les données sont transmises avec un en-tête de protocole de moins de 24 octets.

4. Procédé selon l'une des revendications 1 à 3, **caractérisé en ce que** deux instructions sont adressées avec une temporisation causée par le système de bus de 150 µs au maximum.

5. Procédé selon l'une des revendications 1 à 4, **caractérisé en ce que** des instructions sont adressées par plusieurs maîtres.

6. Procédé selon la revendication 5, **caractérisé en ce qu'**en cas de défaillance d'un maître, les instructions sont adressées par un autre maître.
